# EUROPÄISCHE PATENTANMELDUNG

(11) **EP 4 844 462 A1**
(43) Veröffentlichungstag der Anmeldung: **25.11.2026**
(21) Anmeldenummer: 26177524.1
(22) Anmeldetag: 08.05.2026
(51) Int. Cl.: G02B 6/36, G01N 21/954, G02B 23/24, G02B 23/26

(54) **HOHLRAUMINSPEKTIONS- UND/ODER -BEARBEITUNGSSYSTEM**

(30) Priorität: 16.05.2025 DE 102025119061
(71) Anmelder: IBAK Helmut Hunger GmbH & Co. KG, 24148 Kiel (DE)
(72) Erfinder: Rahn, Felix, 24148 Kiel (DE); Stock, Markus, 24148 Kiel (DE)
(74) Vertreter: Patentanwälte Hemmer Lindfeld Frese Partnerschaft mbB

(57) **Zusammenfassung**

Die Erfindung betrifft ein Hohlrauminspektions- und/oder -bearbeitungssystem mit zumindest einer in einen Hohlraum einführbaren Sonde (2) und einem mit der Sonde (2) verbundenen Kabel (6), welches zumindest einen Lichtwellenleiter (26) und eine Dreh-Kupplung (12) aufweist, wobei die Dreh-Kupplung (12) zwei Kupplungsteile (14, 16) hat, die drehfest miteinander verbunden oder miteinander verbindbar sind, in den beiden Kupplungsteilen (14, 16) jeweils eine mit einem Ende eines Lichtwellenleiters (26, 28) verbundene Ferrule (38, 40) angeordnet ist, von denen zumindest eine Ferrule (38) in dem zugehörigen Kupplungsteil (16) drehbar gelagert ist, und wobei die Ferrulen (38, 40) mit einer am Außenumfang der Ferrulen (38, 40) anliegenden Hülse (48) derart in Eingriff sind, dass die Ferrulen (38, 40) durch die umgebende Hülse (48) fluchtend zueinander ausgerichtet sind und dass zumindest eine der Ferrulen (40) im Inneren der Hülse (48) um Ihre Längsachse (D) drehbar ist, sowie eine Dreh-Kupplung (12).

## Beschreibung

Die Erfindung betrifft ein Hohlrauminspektions- und/oder -bearbeitungssystem sowie eine Dreh-Kupplung für ein Lichtwellenleiterkabel, insbesondere zur Verwendung in einem solchen Hohlrauminspektions- und/oder -bearbeitungssystem.

Hohlrauminspektionssysteme werden beispielsweise eingesetzt, um Kanalrohre zu inspizieren. Derartige Systeme weisen eine Sonde mit einer Kamera auf, welche über ein Versorgungs- und Datenkabel mit einer außerhalb des Kanalrohrs angeordneten Steuereinrichtung und Haspel zum Aufwickeln des Kabels verbunden ist. Da die Haspel gedreht wird und in der Regel auch die Kamera frei drehbar ist, sind in dem Kabel Dreh-Kupplungen erforderlich. Wenn das Kabel elektrische Leiter zur Energieversorgung und ein Lichtwellenleiterkabel zur Datenübertragung aufweist, sind in der Dreh-Kupplung somit drehbare Schnittstellen zur elektrischen Übertragung und Lichtübertragung erforderlich. Ein Rohrleitungsinspektions- und/oder -bearbeitungsgerät mit einer solchen Kupplung ist beispielsweise aus DE 10 2021 208 655 A1 bekannt.

Bei der Kupplung von Lichtwellenleitern besteht das Problem, dass die Linsen an den Enden der zu kuppelnden Lichtwellenleiter axial fluchtend zueinander ausgerichtet werden müssen. Dies erfordert sehr hohe Fertigungstoleranzen und Genauigkeiten bei der Montage.

Vor diesem Hintergrund ist es Aufgabe der Erfindung, ein Hohlrauminspektions- und/oder -bearbeitungssystem mit einer Dreh-Kupplung für einen Lichtwellenleiter bereitzustellen, bei welchem auf einfache Weise eine genaue Ausrichtung der optischen Bauteile der Kupplung zueinander realisiert werden kann.

Diese Aufgabe wird gelöst durch ein Hohlrauminspektions- und/oder -bearbeitungssystem mit den in Anspruch 1 angegeben Merkmalen sowie durch eine Dreh-Kupplung mit den in Anspruch 15 angegeben Merkmalen. Bevorzugte Ausführungsformen ergeben sich aus den zugehörigen Unteransprüchen, der nachfolgenden Beschreibung sowie den beigefügten Figuren.

Das erfindungsgemäße Hohlrauminspektions- und/oder -bearbeitungssystem dient dazu, Hohlräume, wie beispielsweise Kanalrohre oder Schächte zu inspizieren und/oder im Inneren derartiger Hohlräume Bearbeitungsvorgänge vorzunehmen. Solche Bearbeitungsvorgänge können beispielsweise Fräsaufgaben sein, welche mit geeigneten Fräswerkzeugen durchgeführt werden. Somit handelt sich bei dem erfindungsgemäßen Hohlrauminspektions- und/oder -bearbeitungssystem bevorzugt um ein Kanalrohrinspektions- und/oder -bearbeitungssytem, welches zur Inspektion und/oder Bearbeitung von Kanalbauwerken wie Kanalrohren oder Schächten vorgesehen ist. Das System weist zumindest eine in einem Hohlraum, beispielsweise einem Kanalrohr oder einem Schacht einführbare Sonde auf. Die Sonde weist bevorzugt zumindest eine Kamera zur Inspektion des Hohlraumes auf. Alternativ oder zusätzlich kann an der Sonde zumindest ein Bearbeitungswerkzeug angeordnet sein, um Bearbeitungsaufgaben im Inneren eines Hohlraumes durchzuführen. So kann die Sonde beispielsweise einen rotierenden Fräser aufweisen. Die Sonde ist mit einem Kabel verbunden, welches insbesondere zur Datenübertragung von der Sonde zu einer beabstandeten Steuereinrichtung und gegebenenfalls umgekehrt von der Steuereinrichtung zu der Sonde dient. Wenn die Sonde eine Kamera aufweist, das heißt es sich um Kamerasonde handelt, dient das Kabel insbesondere dazu, Bild- oder Videodaten von der Sonde zu einer beabstandeten Steuereinrichtung bzw. Verarbeitungseinrichtung zu übertragen. Dazu weist das Kabel erfindungsgemäß zumindest einen Lichtwellenleiter auf. Dieses Kabel weist ferner zumindest eine Dreh-Kupplung auf bzw. ist mit einer solchen Dreh-Kupplung verbunden. Eine solche Dreh-Kupplung ist zum Beispiel erforderlich, wenn das Kabel auf einer Haspel aufwickelbar ist und/oder wenn die Sonde relativ zu dem Kabel um die Längsachse rotierbar sein soll.

Erfindungsgemäß weist die Dreh-Kupplung zwei Kupplungsteile auf, welche drehfest miteinander verbunden sind oder miteinander verbindbar sind. Diese beiden Kupplungsteile können insbesondere ein äußeres Gehäuse der Kupplung bilden, welches eine ausreichend feste mechanische Verbindung bildet und weitere Komponenten der Dreh-Kupplung im Inneren schützt. In jeden der beiden Kupplungsteile ist jeweils eine Ferrule angeordnet. Die Ferrulen sind jeweils mit einem Ende eines Lichtwellenleiters verbundenen und bilden eine optische Schnittstelle bzw. Kupplung zwischen den zwei Lichtwellenleitern. Die Ferrulen sind vorzugsweise fest mit den Lichtwellenleitern verbunden, insbesondere verschweißt, und bilden somit das optische Ende jeweils eines Lichtwellenleiters, aus dem Licht austritt bzw. durch welches Licht in den Lichtwellenleiter eingeleitet werden kann. Zumindest eine der beiden Ferrulen ist in dem zuggehörigen Kupplungsteil, das heißt dem Kupplungsteil, in dem die Ferrule angeordnet ist, drehbar gelagert. Dabei ist die Ferrule derart drehbar gelagert, dass sie sich um ihre Längsachse, welche der optischen Achse entspricht, entlang derer Licht aus der Ferrule austritt bzw. in die Ferrule eingeleitet werden kann, im Inneren des Kupplungsteils drehen kann. Gemeinsam mit der Ferrule kann sich somit der mit der Ferrule verbundene Lichtwellenleiter um seine Längsachse relativ zu dem zugehörigen Kupplungsteil und damit zu beiden miteinander verbundenen Kupplungsteilen sowie dem mit dem anderen Kupplungsteil verbundenen Lichtwellenleiter drehen. Die Ferrule ist insbesondere frei drehbar angeordnet, sodass der Drehwinkel nicht begrenzt ist und sie sich beliebig oft um ihre Längsachse drehen bzw. rotieren kann.

Die Ferrulen sind ferner beide mit einer am Außenumfang der Ferrulen anliegenden Hülse in Eingriff. Die Hülse weist zwei offene Längsenden auf, wobei die beiden Ferrulen von diesen offenen Längsenden her in die Hülse eingreifen, so dass sie in der Hülse einander gegenüber liegen. Das heißt eine erste Ferrule greift in das erste axiale Längsende der Hülse ein, während die zweite Ferrule in das entgegengesetzt gerichtete zweite offene Längsende der Hülse eingreift. Die Ferrulen sind an ihrem Außenumfang kreiszylindrisch ausgebildet und die Hülse weist einen kreiszylindrischen Innenquerschnitt auf, sodass die Hülse am Außenumfang der Ferrule in Anlage treten kann. Die beiden Ferrulen werden dabei durch die umgebende Hülse fluchtend, das heißt mit ihren Längsachsen bzw. optischen Achsen zueinander fluchtend ausgerichtet. Dazu ist bevorzugt eine spielfreie Anlage des Innenumfanges der Hülse am Außenumfang der Ferrulen gegeben. Zumindest eine der beiden Ferrulen ist im Inneren der Hülse um ihre Längsachse drehbar, wobei der Außenumfang dieser Ferrule an der Innenwandung der Hülse gleitend geführt ist, sodass bei der Drehung die fluchtende Ausrichtung der beiden Ferrulen zueinander gewahrt bleibt. Die Hülse realisiert auf sehr einfache Weise eine zuverlässige Ausrichtung der beiden Ferrulen zueinander, unabhängig von der Lagerung der Ferrulen in den beiden Kupplungsteilen. Auf diese Weise können die erforderlichen Toleranzen bei der Lagerung in den Kupplungsteilen reduziert werden und es kann eine zuverlässig fluchtende Anordnung der Ferrulen zueinander in einer kostengünstig zu fertigenden und einfach zu montierenden Kupplung realisiert werden.

Die beiden Ferrulen weisen an ihren einander zugewandten Axialenden jeweils eine Lichtaustrittsfläche und vorzugsweise jeweils eine Linse auf. Über die Lichtaustrittsfläche der einen Ferrule kann Licht austreten und dann in die Lichtaustrittsfläche der anderen Ferrule eintreten, und umgekehrt. Wenn die Lichtaustrittsflächen linsenförmig ausgebildet sind bzw. durch eine mit der Ferrule verbundene Linse realisiert werden, kann die austretende Strahlung gleichzeitig kollimiert werden, sodass zwischen den beiden Ferrulen die Lichtstrahlen im Wesentlichen parallel zur optischen Achse gerichtet sind, sodass ein möglichst verlustfreier Lichtübergang zwischen den beiden Lichtaustrittsflächen der benachbarten Ferrulen gewährleistet ist. Durch die fluchtende Anordnung der Ferrulen liegen die Lichtaustrittsflächen dabei definiert ausgerichtet einander gegenüber.

Die Hülse ist vorzugsweise in radialer Richtung federnd ausgebildet, zum Beispiel aus Metall, insbesondere Federstahl. Die federnde Ausgestaltung kann beispielsweise durch eine geschlitzte Ausgestaltung der Hülse realisiert werden. Bei einer solchen geschlitzten Ausgestaltung kann die Hülse in der Längswandung einen Schlitz aufweisen, welcher sich vorzugsweise über die gesamte Länge der Hülse erstreckt. Alternativ können auch mehrere Schlitze vorgesehen sein, welche sich nur über Teilabschnitte der axialen Länge erstrecken. Die Hülse ist vorzugsweise so ausgebildet, dass in einer Ruhelage der Innendurchmesser geringfügig kleiner als der Außendurchmesser der Ferrulen ist, sodass die Hülse beim Einsetzen der Ferrulen elastisch geweitet wird, wodurch eine spielfreie Anlage des Innenumfanges der Hülse am Außenumfang der Ferrulen sichergestellt wird. Dabei ist die Federwirkung der Hülse bevorzugt so eingestellt, dass an zumindest einer der Ferrulen die Klemmkraft so ist, dass die Drehbarkeit der Ferrule im Inneren der Hülse gewahrt bleibt.

Vorzugsweise ist zumindest in einem der beiden Kupplungsteile die dort gelagerte bzw. angeordnete Ferrule in wenigstens einer Richtung quer zu ihrer Längsachse beweglich angeordnet, das heißt mit Spiel gelagert. Gleichzeitig ist diese Ferrule bevorzugt drehfest oder nur begrenzt drehbar in dem zugehörigen Kupplungsteil angeordnet. Dabei muss nicht direkt die Ferrule selber in dieser Weise in dem Kupplungsteil gelagert sein. Die Ferrule könnte auch in einem Haltelement fixiert sein, welches quer zur Längsachse der Ferrule beweglich angeordnet ist, das heißt mit Spiel gelagert ist, und bevorzugt drehfest oder nur begrenzt drehbar in dem zugehörigen Kupplungsteil angeordnet ist. So kann über das Haltelement die beschriebene bewegliche Lagerung der Ferrule realisiert werden. Vorzugsweise ist somit eine erste Ferrule in ihrem Kupplungsteil um die Längsachse drehbar gelagert, wobei diese drehbare Lagerung vorzugsweise so ausgebildet ist, dass sie in radialer Richtung spielfrei ist, sodass die Ferrule zentriert um ihre Längsachse drehbar ist. Die zweite Ferrule, die in dem anderen, das heißt zweiten Kupplungsteil angeordnet bzw. gelagert ist, ist vorzugsweise direkt oder indirekt so gelagert, dass sie nicht drehbar ist, allerdings mit Spiel in radialer Richtung gelagert ist, sodass sie sich quer zur Längsachse bzw. zur optischen Achse um ein gewisses Maß bewegen kann und weiter bevorzugt auch um eine Achse quer zu der Längsachse um ein gewisses Maß verschwenken kann. Auf diese Weise können aus der Lagerung resultierende Fluchtungsfehler und Winkelfehler gegenüber der ersten Ferrule durch das Spiel ausgeglichen werden. Die mit Spiel gelagerte Ferrule kann sich bewegen, um sich fluchtend zu der anderen Ferrule auszurichten. Die genaue Ausrichtung relativ zu der ersten Ferrule erfolgt dabei durch die Hülse, in welche beide Ferrulen eingreifen. Das heißt beim Eingriff in die Hülse richtet sich die mit Spiel gelagerte Ferrule selbsttätig fluchtend zu der ersten Ferrule aus.

Gemäß einer weiteren bevorzugten Ausgestaltung ist die Kupplung als lösbare Kupplung ausgebildet, bei welcher die beiden Kupplungsteile in axialer Richtung zusammenfügbar und wieder trennbar sind und eine lösbare Verbindung zwischen den beiden Kupplungsteilen ausgebildet werden kann. Eine solche lösbare Verbindung kann beispielsweise über einen Gewindeeingriff oder auch durch eine Steckverbindung erreicht werden. Besonders bevorzugt weist eines der Kupplungsteile ein Außengewinde auf und an dem anderen Kupplungsteil ist eine Überwurfmutter mit einem korrespondierenden Innengewinde angeordnet, welches in das Außengewinde des anderen Kupplungsteils eingreift. So kann über die Überwurfmutter das zweite Kupplungsteil an dem ersten Kupplungsteil durch eine Verschraubung gesichert werden. Durch die Verschraubung werden die beiden Kupplungsteile drehfest miteinander verbunden, wobei weiter bevorzugt zusätzlich ein formschlüssiger Eingriff zwischen den beiden Kupplungsteilen besteht, welcher die beiden Kupplungsteile in ihrer Winkellage definiert zueinander ausrichtet und drehfest ausgerichtet hält. Wenn die Kupplung getrennt wird und die beiden Kupplungsteile voneinander außer Eingriff treten, tritt vorzugsweise zumindest eine der Ferrulen von der Hülse außer Eingriff, das heißt wird aus der Hülse herausgezogen. Beim Wiederzusammenfügen wird die Ferrule wieder in die Hülse eingeführt, wobei es zu der beschriebenen axial fluchtenden Ausrichtung zwischen den beiden Ferrulen kommt.

Gemäß einer weiteren möglichen Ausgestaltung der Erfindung ist die Hülse an einem Axialende aufgeweitet ausgebildet. Das heißt die Hülse weitet sich zu einem Axialende hin auf, insbesondere trichterförmig auf. Dadurch wird ein Einführtrichter geschaffen, welcher die Ferrule beim Zusammenstecken in die Hülse führt. Dies ist insbesondere dann wichtig, wenn ein Winkelfehler oder ein radialer Versatz der Ferrule bezüglich der Längsachse der Hülse gegeben sein sollte, sodass die Ferrule beim Einführen in die Hülse in die zu der Hülse und der anderen Ferrule fluchtenden Lage geführt wird. Vorzugsweise ist die Hülse an demjenigen Axialende aufgeweitet, in welches die Ferrule eingreift, die im Inneren der Hülse relativ zu der Hülse drehbar sein soll. Gemäß einer weitern möglichen Ausgestaltung der Erfindung ist die Hülse so ausgebildet und angeordnet, dass sie von beide Ferrulen in axialer Richtung abziehbar ist. Dies hat den Vorteil, dass die freien Enden beider Ferrulen frei gelegt werden können, beispielsweise um sie reinigen zu können.

Gemäß einer weiteren möglichen Ausgestaltung sind die beiden Ferrulen und die Hülse derart ausgestaltet, dass in axialer Richtung die Haltekraft zwischen der Hülse und einer ersten der beiden Ferrulen größer ist als zwischen der Hülse und einer der zweiten der beiden Ferrulen. Dadurch wird sichergestellt, dass bei lösbarer Ausgestaltung der Kupplung beim Trennen der Kupplung die zweite Ferrule aus der Hülse herausgezogen wird, während die Hülse an der ersten Ferrule weiter klemmend gehalten wird. Dadurch wird eine definierte Trennstelle beim Lösen der Kupplung sichergestellt. Unter höherer Krafteinwirkung kann die Hülse dennoch auch von der ersten Ferrule abgenommen werden, beispielsweise um die Linse an der ersten Ferrule reinigen zu können. Wenn die Hülse an einem Axialende aufgeweitet ausgebildet ist, so ist sie vorzugsweise an demjenigen Axialende aufgeweitet, in welches die zweite der beiden Ferrulen eingreift. So wird beim Trennen der Kupplung die zweite Ferrule aus der Hülse herausgezogen und beim Zusammenfügen die zweite Ferrule durch die trichterförmige Aufweitung der Hülse in die Hülse eingeführt, bis sie dort wieder fluchtend und vorzugsweise im Inneren der Hülse drehbar gelagert ist.

Besonders bevorzugt ist die Hülse an einem axialen Ende aufgeweitet ausgebildet und diejenige Ferrule, welche in dieses aufgeweitete Axialende eingreift, ist quer zu ihrer Längsachse beweglich in dem zu dieser Ferrule zugehörigen Kupplungsteil angeordnet. Dies bedeutet bevorzugt ist die zweite Ferrule in dem zweiten Kupplungsteil mit Spiel gelagert. Dies ist die Ferrule, welche mit der Hülse beim Kuppeln der Kupplung in Eingriff tritt und beim Trennen der Kupplung außer Eingriff tritt. Gleichzeitig ist dies vorzugsweise die Ferrule, welche in der Hülse drehbar gleitet. Die andere, das heißt erste Ferrule ist hingegen mit größerer Haltekraft in der Hülse gehalten, sodass diese beim normalen Trennen der Kupplung nicht außer Eingriff tritt. Gleichzeitig ist die erste Ferrule vorzugsweise diejenige Ferrule, die in ihrem zugehörigen Kupplungsteil, das heißt dem ersten Kupplungsteil drehbar gelagert ist, beispielsweise über ein Wälzlager im Inneren des Kupplungsteils.

Gemäß einer besonderen Ausführungsform der Erfindung weist das Kabel neben dem Lichtwellenleiter zumindest einen elektrischen Leiter, das heißt einen oder mehrere elektrische Leiter, auf und die Dreh-Kupplung weist zumindest eine elektrische Kupplung und weiter bevorzugt eine trennbare elektrische Kupplung auf. Besonders bevorzugt sind in dem Kabel zumindest zwei elektrische Leiter angeordnet, welche der Energieversorgung der Sonde dienen können. Die Dreh-Kupplung ist vorzugsweise so ausgebildet, dass sie für die elektrischen Leiter eine drehbare elektrische Verbindung bereitstellt, beispielsweise durch einen oder mehrere Schleifringe. Wenn zwei elektrische Leiter vorgesehen sind, sind vorzugsweise zumindest zwei elektrisch getrennte Schleifringe vorgesehen. Darüber hinaus ist bevorzugt eine trennbare elektrische Kupplung an der Drehdurchführung vorgesehen, welche eine vollständige Trennung der Dreh-Kupplung, sowohl für den Lichtleiter als auch für den oder die elektrischen Leiter ermöglicht.

Weiter bevorzugt weist die beschriebene elektrische Kupplung miteinander in Eingriff und/oder miteinander in Anlage bringbare elektrische Kontakte auf. Die elektrischen Kontakte sind bevorzugt jeweils mit den beiden Kupplungsteilen verbunden, sodass beim Zusammenfügen der Kupplungsteile elektrische Kontakte an beiden Kupplungsteilen, welche komplementär zueinander ausgebildet sind, miteinander in Eingriff treten oder miteinander in Anlage kommen. Wenn die Kupplungsteile getrennt werden, können die komplementären elektrischen Kontakte in umgekehrter Weise außer Eingriff treten bzw. voneinander außer Anlage kommen, sodass die Kupplungsteile getrennt werden können. Beim Zusammenfügen der Kupplungsteile wird vorzugsweise automatisch eine elektrische Verbindung der elektrischen Leiter über die elektrischen Kontakte hergestellt.

In einer weiteren möglichen Ausgestaltung kann die elektrische Kupplung trennbar, aber gleichzeitig drehfest ausgebildet sein, sodass die elektrische Kupplung nur zur trennbaren Verbindung der elektrischen Leiter zwischen den lösbar miteinander verbindbaren Kupplungsteilen dient, nicht jedoch der Drehdurchführung. Für die Drehdurchführung ist bevorzugt in einem der beiden Kupplungsteilen eine nicht trennbare elektrische Drehdurchführung angeordnet, beispielsweise mit einem oder mehreren Schleifringen. Die Trennung von Drehführung und trennbarer elektrischer Kupplung hat den Vorteil, dass beides hinsichtlich seiner Funktion optimiert werden kann, das heißt eine zuverlässig arbeitende Drehdurchführung bereitgestellt werden kann und auf der anderen Seite eine zuverlässig funktionierende trennbare elektrische Kupplung bereitgestellt werden kann.

Gemäß einer weiteren möglichen Ausgestaltung der Erfindung ist die beschriebene zumindest eine elektrische Kupplung in einem die Ferrulen umfänglich umgebenden Bereich der Kupplungsteile bzw. eines der Kupplungsteile angeordnet. Dies bedeutet, dass der Lichtwellenleiter mit den beiden einander gegenüberliegenden Ferrulen in den beiden Kupplungsteilen bevorzugt zentral, das heißt fluchtend mit der Drehachse angeordnet ist, sodass die von den Ferrulen gebildete optische Kupplung für den Lichtleiter in Richtung der Drehachse zusammengefügt und getrennt werden kann und gleichzeitig die für die optische Übertragung erforderliche Drehdurchführung über eine relative Drehung der Ferrulen um die beschriebene Drehachse ermöglicht wird. Die vorzugsweisen nicht drehbaren und feststehenden elektrischen Kontakte der elektrischen Kupplung können in einem Umfangsbereich der Ferrulen angeordnet werden. Eine elektrische Drehdurchführung ist bevorzugt in Richtung der Längs- bzw. Drehachse axial beabstandet zu der beschriebenen optischen Kupplung angeordnet, das heißt in Richtung der Drehachse gesehen hinter einer der Ferrulen. Dies ermöglicht einen kompakten Aufbau der gesamten Dreh-Kupplung, wenn sie eine optische und eine elektrische Kupplung und Drehführung beinhaltet.

In einer weiteren möglichen Ausgestaltung der Erfindung verbindet die vorangehend beschriebene Dreh-Kupplung ein Axialende des Kabels mit einer Haspel, wobei einer der beiden Kupplungsteile mit dem Axialende des Kabels verbunden ist und der andere der beiden Kupplungsteile an der Haspel angeordnet ist. Der an der Haspel angeordnete Kupplungsteil weist vorzugsweise einen drehbaren Teil auf, der mit einem feststehenden Teil der Haspel verbunden ist. Die ermöglicht es, dass das Kabel sich mit der Dreh-Kupplung frei zu dem feststehenden Teil der Haspel um die Längsachse des Kabels drehen kann. Dies ist für ein Aufwickeln des Kabels auf der Haspel erforderlich. Alternativ oder zusätzlich könnte eine entsprechende Dreh-Kupplung auch an der Sonde bzw. einer Kamera oder an einer beliebigen anderen Stelle in einer Kabelverbindung zu der Sonde angeordnet sein, an welcher eine freie Drehbarkeit der Verbindung erforderlich ist.

Neben dem vorangehend beschriebenen Hohlrauminspektions- und/oder -bearbeitungssystem ist Gegenstand der Erfindung eine Dreh-Kupplung für ein Lichtwellenleiterkabel, wobei diese Dreh-Kupplung bevorzugt zur Verwendung in einem Hohlrauminspektions- und/oder -bearbeitungssystem vorgesehen und ausgebildet ist, wie es vorangehend beschrieben wurde. Bevorzugte Ausgestaltungen der Dreh-Kupplung, wie sie vorangehend mit Bezug zu dem Hohlrauminspektions- und/oder -bearbeitungssystem beschrieben wurden, sind ebenfalls als bevorzugte Ausführungsbeispiele der nachfolgend beschriebenen Dreh-Kupplung zu verstehen. Umgekehrt sind nachfolgend beschriebene bevorzugte Merkmale auch als bevorzugte Merkmal des Hohlrauminspektions- und/oder -bearbeitungssystems anzusehen.

Die erfindungsgemäße Dreh-Kupplung weist zwei Kupplungsteile auf, die drehfest miteinander verbunden oder miteinander verbindbar sind. Das heißt bevorzugt sind die Kupplungsteile lösbar, sodass sie miteinander in Eingriff bringbar und verbindbar sind und voneinander getrennt werden können, um die Dreh-Kupplung zu trennen. In den beiden Kupplungsteilen ist jeweils eine mit einem Ende eines Lichtwellenleiters verbundene Ferrule angeordnet. Diese Ferrulen bilden eine optische Kupplung, indem sie mit ihren Axialenden, welche weiter bevorzugt linsenförmig ausgebildet sein können oder eine Linse aufweisen können, einander gegenüberliegen, sodass Licht, welches aus einer ersten Ferrule austritt, in das Axialende der zweiten Ferrule eintreten kann und umgekehrt. Die Ferrulen sind entlang einer gemeinsamen optischen Achse ausgerichtet, um welche die Ferrulen relativ zueinander drehbar sind. So wird eine optische Dreh-Kupplung geschaffen in der Licht von einer Ferrule zu der anderen und umgekehrt übertragen werden kann, während die beiden Ferrulen um die optische Achse frei zueinander drehbar angeordnet sein können. Um dies zu ermöglichen, ist zumindest eine Ferrule in dem zugehörigen Kupplungsteil drehbar gelagert. Dies ermöglicht es, dass die beiden Kupplungsteile drehfest miteinander verbunden werden können und die optische Dreh-Kupplung bzw. Drehdurchführung durch die drehbare Lagerung zumindest einer der Ferrulen ermöglicht wird. So können die Ferrulen sich relativ zueinander um die optische Achse drehen. Die Ferrulen sind mit einer am Außenumfang der Ferrulen anliegenden Hülse derart in Eingriff, dass die beiden Ferrulen durch diese umgebende Hülse fluchtend zueinander ausgerichtet sind. Die Hülse ist dazu entlang der beschriebenen optischen Achse gerichtet, sodass sie, wenn die beiden Ferrulen in die Hülse eingreifen, diese Ferrulen entlang der optischen Achse fluchtend zueinander ausrichten. Zumindest eine der beiden Ferrulen ist im Inneren der Hülse um ihre Längsachse drehbar gelagert. So können die Ferrulen sich relativ zueinander um die Längsachse, welche der optischen Achse entspricht, drehen, werden dabei aber über die Hülse fluchtend zueinander ausgerichtet gehalten. Dazu liegt die Hülse bevorzugt spielfrei am Außenumfang der Ferrulen an, wobei sie an der zumindest einen drehbaren Ferrule gleitend anliegt. Bezüglich weiterer bevorzugter Ausgestaltungen wird auf die obige Beschreibung verwiesen.

Nachfolgend wir die Erfindung beispielhaft anhand der beigefügten Figuren beschrieben. In diesen zeigt:
- Fig. 1: schematisch ein erfindungsgemäßes Hohlrauminspektionssystem,
- Fig. 2: eine Schnittansicht einer erfindungsgemäßen Dreh-Kupplung im getrennten Zustand,
- Fig. 3: die Dreh-Kupplung gemäß Figur 2 im zusammengefügten Zustand,
- Fig. 4: eine vergrößerte Detailansicht des elektrischen und optischen Kontaktbereiches in der Dreh-Kupplung gemäß Figur 3,
- Fig. 5: eine schematische Schnittansicht einer erfindungsgemäßen Dreh-Kupplung,
- Fig. 6: eine geschnittene perspektivische Ansicht der Dreh-Kupplung gemäß 5 und
- Fig. 7: eine Draufsicht auf die Stirnseite der in Figur 6 schematisch gezeigten Dreh-Kupplung.

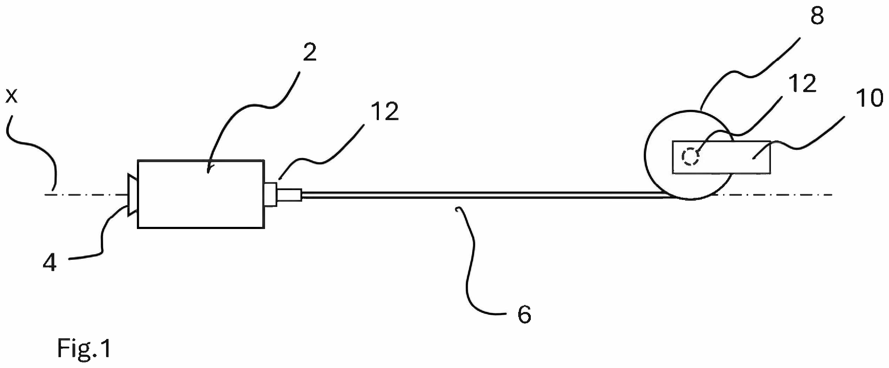

Figur 1 zeigt schematisch ein Hohlrauminspektionssystem gemäß der Erfindung. Dieses System weist eine Sonde 2 auf, welche als eine Kamerasonde 2 mit einer Kamera 4 ausgebildet ist. Die Sonde 2 kann beispielsweise entlang der Vorschubachse X in ein Kanalrohr einschiebbar sein, um mit Hilfe der Kamera 4 das Innere dieses Kanalrohrs zu inspizieren. Neben der Kamera 4 kann die Sonde 2 insbesondere auch noch Beleuchtungsmittel aufweisen, welche hier nicht gezeigt sind. Alternativ oder zusätzlich könnte die Sonde 2 auch ein Bearbeitungswerkzeug wie zum Beispiel einen Fräser aufweisen. Die Sonde 2 ist über ein Kabel 6 mit einer Haspel 8 zum Aufwickeln des Kabels 6 verbunden. An der Haspel 8 ist das Kabel 6 über eine Dreh-Kupplung 12, wie sie nachfolgend im Detail beschrieben wird, mit einem feststehenden Teil 10 der Haspel 8 verbunden, welcher wiederrum über hier nicht gezeigten Kabelverbindungen mit einer Steuereinrichtung für die Sonde 2 verbunden sein kann. Auch die Sonde 2 ist mit dem Kabel 6 vorzugsweise drehbar verbunden, um die Sonde 2 so drehen können, dass die Kamera 4 immer eine definierte Lage und Bildausrichtung beibehält. Dazu kann zwischen der Sonde 2 und dem Kabel 6 ebenfalls eine Dreh-Kupplung 12, wie sie nachfolgend beschrieben wird, angeordnet sein.

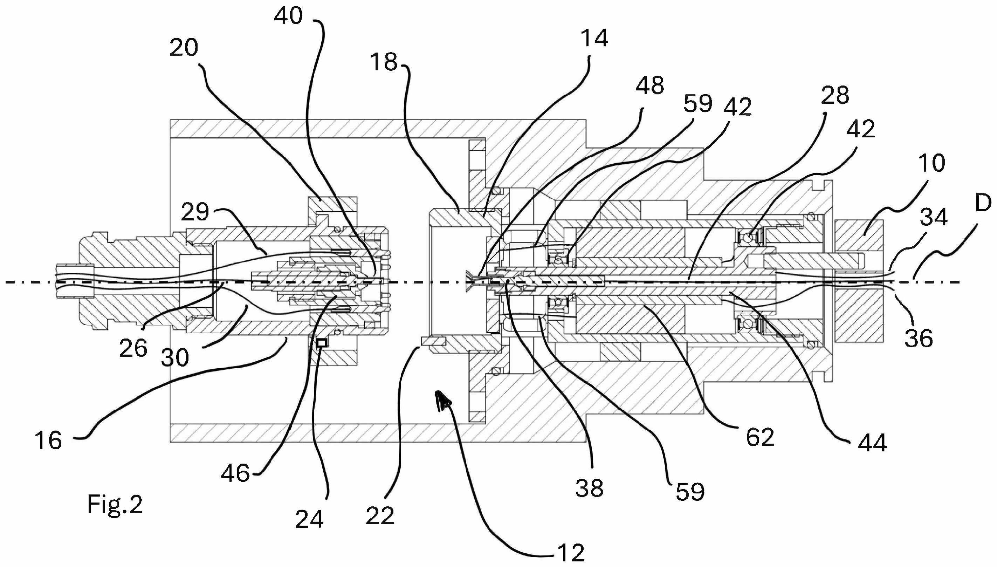

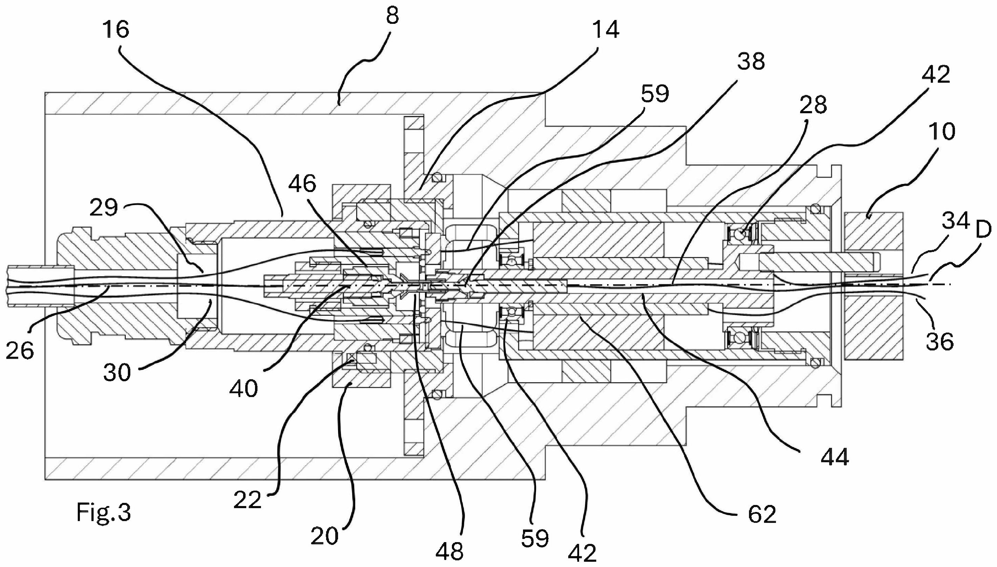

Die Figuren 2 bis 7 zeigen eine Dreh-Kupplung 12 bzw. Details einer solchen Dreh-Kupplung 12, wie sie zum Beispiel an der Haspel 8 angeordnet sein kann. Die Dreh-Kupplung 12 weist zwei Kupplungsteile 14 und 16 auf. Die beiden Kupplungsteile 14 und 16 sind lösbar miteinander verbindbar, wobei sie eine drehfeste Verbindung eingehen. Zur festen Verbindung ist am Außenumfang des ersten Kupplungsteils 14 ein Außengewinde 18 ausgebildet, in welches das Innengewinde einer Überwurfmutter 20 eingreifen kann, welche an dem zweiten Kupplungsteil 16 angeordnet ist. Durch das Gewinde 18 und die Überwurfmutter 20 können die beide Kupplungsteile 14 und 16 in axialer Richtung D aneinandergehalten werden. Eine Verdrehung der beiden Kupplungsteile 14, 16 zueinander wird durch Verdrehsicherung erreicht, welche von einem Stift 22 gebildet wird, der axial von dem ersten Kupplungsteil 14 vorstehet und in eine Ausnehmung 24 an dem zweiten Kupplungsteil 16 eingreift. Der zusammengefügte Zustand ist in Figur 3 gezeigt. Wenn der erste Kupplungsteil 14 und der zweite Kupplungsteil 16 gekuppelt sind, greift, wie in Figur 3 gezeigt, der zweite Kupplungsteil 16 in den ersten Kupplungsteil 14 ein und ist mit Hilfe der Überwurfmutter 20 an dem ersten Kupplungsteil 14 gesichert. Die Verdrehsicherung ist durch den Stift 22 bewirkt.

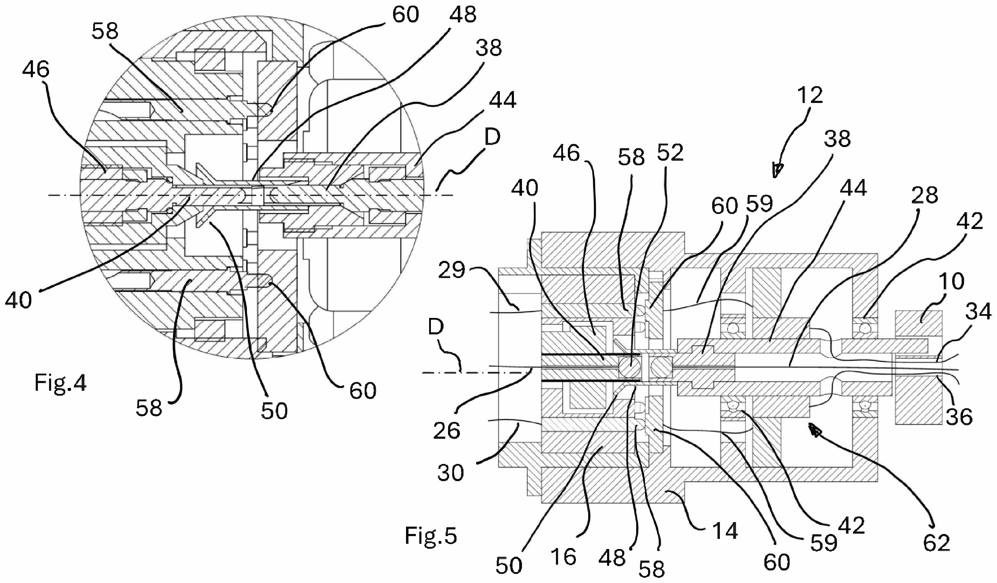

Das Kabel 6 beinhaltet einen Lichtwellenleiter 26 sowie mehrere elektrische Leiter 29, 30 auf, von denen zwei elektrische Leiter in Figuren 2, 3 und 5 dargestellt sind. Entsprechend ist die Dreh-Kupplung 12 so ausgebildet, dass sie eine lösbare und drehbare Verbindung zwischen dem Lichtwellenleiter 26 und einem sich anschließenden Lichtwellenleiter 28 sowie zwischen den elektrischen Leitern 29 und 30 sowie den sich anschließenden elektrischen Leitern 34 und 36 herstellt. Die genaue Ausgestaltung der elektrischen und der optischen Kupplung wird anhand der Figur 4 beschrieben, welche einen vergrößerten Ausschnitt aus Figur 3 darstellt. Wie deutlicher in der schematischen Darstellung in Figur 5 gezeigt endet der Lichtwellenleiter 28 in einer ersten Ferrule 38 und der Lichtwellenleiter 26 endet in einer zweiten Ferrule 40. Die erste Ferrule 38 ist in dem ersten Kupplungsteil 14 um die Längs- bzw. Drehachse D drehbar gelagert, in diesem Beispiel über zwei Wälzlager 42. Durch diese Lagerung ist die Ferrule 38 über ein die Ferrule 38 umgebendes Halteelement 44 in den Wälzlagern 42 bezüglich der Drehachse D axial und radial gelagert, sodass die Ferrule 38 definiert in Richtung der Drehachse D ausgerichtet ist. Auch die zweite Ferrule 40 ist in dem zugehörigen zweite Kupplungsteil 16 über ein Halteelement 46 gelagert. Dabei ist die Ferrule 40 in dem Halteelement 46 spielfrei fixiert. Das Halteelement 46 wiederum ist in dem zweiten Kupplungsteil 16 derart mit Spiel gelagert, dass es einen gewissen radialen Versatz bezüglich der Längs- bzw. Drehachse D und auch einen Winkelversatz bezüglich der Längsachse D für die Ferrule 40 ermöglicht.

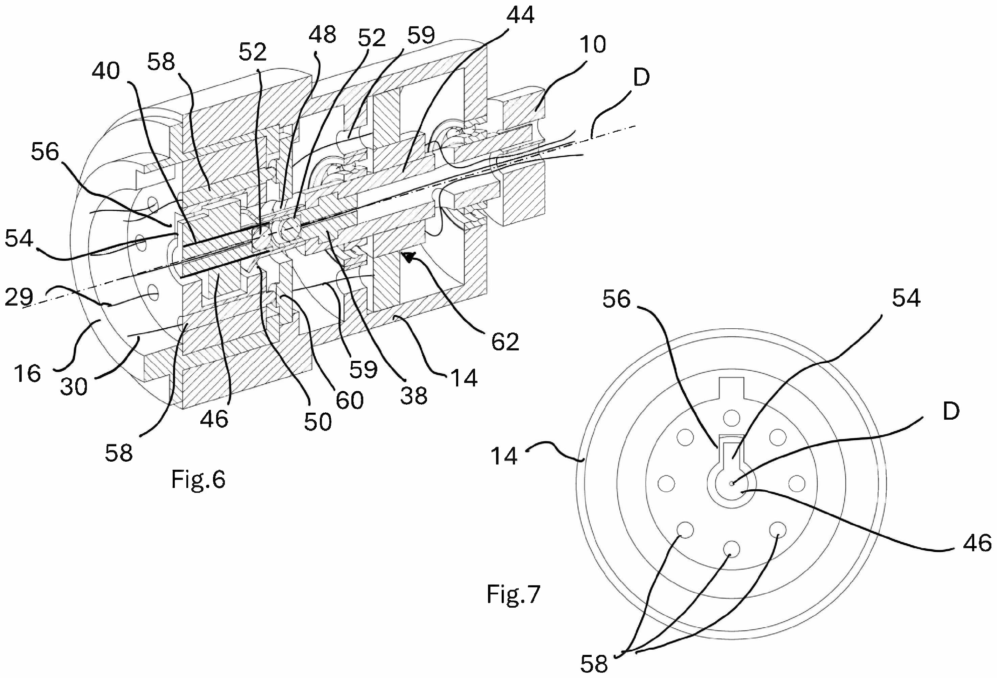

Die beiden Ferrulen 38 und 40 greifen mit ihren freien Enden, welche einander gegenüber liegen, in eine umgebende Hülse 48 ein. Die Ferrulen 38 und 40 liegen im Inneren der Hülse 48 spielfrei an, das heißt die Hülse 48 liegt spielfrei am Außenumfang der Ferrulen 38 und 40 an. Die Hülse 48 ist derart federnd bzw. elastisch ausgebildet, dass sie eine radial nach innen gerichtete Klemmkraft bewirkt, wenn die Ferrulen 38, 40 in die Hülse 48 eingesetzt sind. Dies kann beispielsweise durch eine geschlitzte Ausgestaltung einer federnden Metallhülse realisiert werden, welche sich beim Einführen der Ferrulen 38 und 40 um ein gewisses Maß aufweitet. Das dem zweiten Kupplungsteil 16 zugewandte Ende der Hülse 48 ist trichterförmig erweitert. Die trichterförmige Erweiterung bzw. Aufweitung 50 begünstigt das Einführen der zweiten Ferrule 40 in die Hülse 48, wenn die beiden Kupplungsteile 14 und 16 zusammengefügt werden. Aufgrund der spielbehafteten Lagerung des Halteelementes 46 kann sich dabei die Ferrule 40 selbsttätig in der Längsrichtung der Hülse 48 und damit in der Längsrichtung der Drehachse D fluchtend zu der ersten Ferrule 38 ausrichten. So wird sichergestellt, dass beim Fügen die optischen Achsen der beiden Ferrulen 38 und 40 in Richtung der Drehachse D fluchtend ausgerichtet sind, sodass die Lichtein- und -austrittsflächen der Ferrulen 38 und 40 einander fluchtend gegenüber liegen. Die Lichtein- und -austrittsflächen sind hier als Linsen ausgebildet, wobei sie wie in den Figuren 1 bis 4 angedeutet einstückig mit den Ferrulen 38, 40 ausgebildet sein können oder aber auch als separate Linsen 52 den Ferrulen 38, 40 vorgelagert werden können, wie in Figuren 5 und 6 gezeigt. Dort sind die Linsen 52 kugelförmig ausgebildet. Die bewegliche Lagerung des Halteelementes 46 weist eine Verdrehsicherung auf, wie sie in den Figuren 6 und 7 dargestellt ist. Die Verdrehsicherung weist einen radial auskragenden Vorsprung 54 auf, welcher in eine entsprechend geformte Ausnehmung 56 in dem Kupplungsteil 16 eingreift. Auch der Vorsprung 54 ist in der Ausnehmung 56 mit Spiel behaftet, sodass eine Bewegung quer zur Längsachse D möglich ist, der Drehwinkel jedoch begrenzt ist.

Die Hülse 48 ist von beiden Ferrulen 38 und 40 abnehmbar, allerdings an der ersten Ferrule 38 mit größerer Klemmkraft gehalten als an der zweiten Ferrulen 40. Dadurch wird sichergestellt, dass, wenn das erste Kupplungsteil 14 und das zweite Kupplungsteil 16 axial auseinander gezogen werden stets die Ferrule 40 von der Hülse 48 außer Eingriff tritt, die Hülse 48 aber an der ersten Ferrule 38 verbleibt. Von dieser ersten Ferrule 38 kann die Hülse 48 abgezogen werden, um beispielsweise die Linse 52 an der Ferrule 38 bzw. deren axiales Lichtaustrittsfenster reinigen zu können. Ferner ermöglicht die geringere Andruckkraft am Außenumfang der zweiten Ferrule 40, dass sich die Hülse 48 auf der Oberfläche dieser Ferrule 40 drehen kann bzw. entlang gleiten kann. So ist eine relative Verdrehung der Ferrulen 38 und 40 zueinander um die Drehachse D möglich.

Neben der vorangehend beschriebenen optischen Kupplung zwischen den beiden Lichtwellenleitern 26 und 28 bietet die Dreh-Kupplung 12 auch eine elektrische Kupplung zwischen den elektrischen Leitern 29 und 30 auf der einen Seite und den elektrischen Leitern 34 und 36 auf der anderen Seite. Hierzu ist eine lösbare elektrische Kupplung vorgesehen. Diese wird im gezeigten Beispiel durch federnde Kontaktstifte 58 in dem zweiten Kupplungsteil 16 gebildet, welche an gegenüberliegenden Gegenkontaktflächen 60 in dem ersten Kupplungsteil 14 elektrisch leitend in Anlage kommen, wenn die beiden Kupplungsteile 14 und 16 miteinander verbunden sind. Wie in den Figuren 5 und 7 zu erkennen ist, kann die elektrische Kupplung mehr als zwei Kontaktstifte 58 und korrespondierende Gegenkontaktfläche 60 aufweisen, welche umfänglich um die Drehachse D verteilt sind. Zwischen den Gegenkontaktflächen 60 und den elektrischen Leitern 34 und 36 ist als elektrische Dreh-Kupplung eine Schleifringkupplung 62 angeordnet, welche die Drehbarkeit für die elektrische Kupplung realisiert. Die Schleifringkupplung 62 ist konzentrisch zur Drehachse D angeordnet und weist einen drehbaren Teil auf, welcher gemeinsam mit dem Halteelement 44 in den Wälzlagern 42 drehbar gelagert ist. Umfänglich ist ein feststehender Teil angeordnet, welcher über elektrische Leiter 59 elektrisch mit den Gegenanlageflächen 60 verbunden ist.

Bei der in Figur 1 gezeigten Anwendung der erfindungsgemäßen Dreh-Kupplung kann der innere Teil der Schleifringkupplung 62 mit dem Halteelement 44 und der in diesem angeordneten Ferrule 38 drehfest mit dem feststehenden Teil 10 der Haspel 8 verbunden sein, während der Rest der Dreh-Kupplung gemeinsam mit den Kupplungsteilen 14 und 16 mit der Haspel 8 rotierbar ist. Somit liegt der lösbare Teil der Kupplung in dem sich drehenden Teil. Lediglich bei der optischen Kupplung liegen Steckkupplung und Dreh-Kupplung in einem Bauteil, in dem die Ferrulen 38, 40 sich gegeneinander verdrehen können und axial auseinandergezogen werden können, um die optische Verbindung zu trennen. Lagerung und Führung werden dabei von der Hülse 48 gewährleistet. Bei der Anordnung einer beschriebenen Dreh-Kupplung 12 an der Sonde 2 kann zum Beispiel der innere Teil der Schleifringkupplung 62 mit den sich anschließenden elektrischen Leitern 34 und 36 sowie mit dem Halteelement 44 und der in diesem angeordneten Ferrule 38 mit dem Kabel 6 verbunden sein, während der Rest der Dreh-Kupplung 12 gemeinsam mit den Kupplungsteilen 14 und 16 mit der Sonde 2 rotierbar ist. Es wäre aber grundsätzlich auch denkbar das Kabel 6 und Sonde 2 bzw. Kabel 6 und den feststehenden Teil 10 der Haspel 8 vertauscht mit der Dreh-Kupplung 12 zu verbinden.

### Bezugszeichenliste

- 2: Sonde, Kamerasonde
- 4: Kamera
- 6: Kabel
- 8: Haspel
- 10: feststehender Teil
- 12: Dreh-Kupplung
- 14, 16: Kupplungsteile
- 18: Gewinde
- 20: Überwurfmutter
- 22: Stift
- 24: Ausnehmung
- 26, 28: Lichtwellenleiter
- 29, 30, 34, 36: elektrische Leiter
- 38, 40: Ferrulen
- 42: Wälzlager
- 44, 46: Halteelemente
- 48: Hülse
- 50: Aufweitung
- 52: Linsen
- 54: Vorsprung
- 56: Ausnehmung
- 58: Kontaktstifte
- 59: elektrische Leiter
- 60: Gegenkontaktflächen
- 62: Schleifringkupplung
- D: Drehachse
- X: Vorschubachse

## Patentansprüche

1. Hohlrauminspektions- und/oder -bearbeitungssystem mit zumindest einer in einen Hohlraum einführbaren Sonde (2) und einem mit der Sonde (2) verbundenen Kabel (6), welches zumindest einen Lichtwellenleiter (26) und eine Dreh-Kupplung (12) aufweist, wobei
die Dreh-Kupplung (12) zwei Kupplungsteile (14, 16) hat, die drehfest miteinander verbunden oder miteinander verbindbar sind, in den beiden Kupplungsteilen (14, 16) jeweils eine mit einem Ende eines Lichtwellenleiters (26, 28) verbundene Ferrule (38, 40) angeordnet ist, von denen zumindest eine Ferrule (38) in dem zugehörigen Kupplungsteil (14) drehbar gelagert ist, und wobei
die Ferrulen (38, 40) mit einer am Außenumfang der Ferrulen (38, 40) anliegenden Hülse (48) derart in Eingriff sind, dass die Ferrulen (38, 40) durch die umgebende Hülse (48) fluchtend zueinander ausgerichtet sind und dass zumindest eine der Ferrulen (40) im Inneren der Hülse (48) um Ihre Längsachse (D) drehbar ist.

2. Hohlrauminspektions- und/oder -bearbeitungssystem nach Anspruch 1, bei welchem die Ferrulen (38, 40) an ihren einander zugewandten Axialenden jeweils eine Lichtaustrittsfläche und vorzugsweise jeweils eine Linse (52) aufweisen.

3. Hohlrauminspektions- und/oder -bearbeitungssystem nach Anspruch 1 oder 2, bei welchem die Hülse (48) in radialer Richtung federnd ausgebildet ist und vorzugsweise geschlitzt ausgebildet ist.

4. Hohlrauminspektions- und/oder -bearbeitungssystem nach einem der vorangehenden Ansprüche, bei welchem in zumindest einem der beiden Kupplungsteile (16) die Ferrule (40) in wenigstens einer Richtung quer zu ihrer Längsachse (D) beweglich angeordnet ist, wobei diese Ferrule (40) drehfest oder nur begrenzt drehbar in dem zugehörigen Kupplungsteil (16) angeordnet ist.

5. Hohlrauminspektions- und/oder -bearbeitungssystem nach einem der vorangehenden Ansprüche, bei welchem in zumindest einem der beiden Kupplungsteile (16) die Ferrule (40) in einem Haltelement (46) fixiert ist und dieses Haltelement (46) wenigstens einer Richtung quer zu der Längsachse (D) der Ferrule beweglich angeordnet ist, wobei dieses Halteelement (46) drehfest oder nur begrenzt drehbar in dem zugehörigen Kupplungsteil (16) angeordnet ist.

6. Hohlrauminspektions- und/oder -bearbeitungssystem nach einem der vorangehenden Ansprüche, bei welchem die Dreh-Kupplung (12) als lösbare Kupplung ausgebildet ist, bei welcher die beiden Kupplungsteile (14, 16) in axialer Richtung (D) zusammenfügbar und lösbar miteinander verbindbar sind.

7. Hohlrauminspektions- und/oder -bearbeitungssystem nach einem der vorangehenden Ansprüche, bei welchem die Hülse (48) an einem Axialende (50) aufgeweitet ausgebildet ist.

8. Hohlrauminspektions- und/oder -bearbeitungssystem nach einem der vorangehenden Ansprüche, bei welchem die Hülse (48) von beiden Ferrulen (38, 40) in axialer Richtung (D) abziehbar ist.

9. Hohlrauminspektions- und/oder -bearbeitungssystem nach einem der vorangehenden Ansprüche, bei welchem die beiden Ferrulen (38, 40) und die Hülse (48) derart ausgestaltet sind, dass in axialer Richtung (D) die Haltekraft zwischen der Hülse (48) und einer ersten (38) der beiden Ferrulen (38, 40) größer ist als zwischen der Hülse (48) und einer zweiten (40) der beiden Ferrulen (38, 40).

10. Hohlrauminspektions- und/oder -bearbeitungssystem nach einem der vorangehenden Ansprüche, bei welchem die Hülse (48) an einem Axialende aufgeweitet ausgebildet ist und diejenige Ferrule (40), welche in dieses aufgeweitete Axialende (50) eingreift, quer zu ihrer Längsachse (D) beweglich in dem zugehörigen Kupplungsteil (16) angeordnet ist, wobei die beiden Ferrulen (38, 40) und die Hülse (48) ferner derart ausgestaltet sind, dass in axialer Richtung (D)die Haltekraft zwischen der Hülse (48) und der in das aufgeweitete Axialende (50) eingreifenden zweiten Ferrule (40) geringer ist als die Haltekraft zwischen der Hülse (48) und der ersten (38) der beiden Ferrulen (38, 40).

11. Hohlrauminspektions- und/oder -bearbeitungssystem nach einem der vorangehenden Ansprüche, bei welchem das Kabel (6) zumindest einen elektrischen Leiter (29, 30) und die Dreh-Kupplung (12) zumindest eine elektrische Kupplung (58, 60) und vorzugsweise eine trennbare elektrische Kupplung (58, 60) aufweist.

12. Hohlrauminspektions- und/oder -bearbeitungssystem nach einem der vorangehenden Ansprüche, bei welchem die elektrische Kupplung (58, 60) miteinander in Eingriff und/oder miteinander in Anlage bringbare elektrische Kontakte (58, 60) aufweist.

13. Hohlrauminspektions- und/oder -bearbeitungssystem nach einem der vorangehenden Ansprüche, bei welchem die elektrische Kupplung (58, 60) trennbar und drehfest ausgebildet ist und bei welchem in einem (14) der beiden Kupplungsteile (14, 16) eine nicht trennbare elektrische Drehdurchführung (62) angeordnet ist.

14. Hohlrauminspektions- und/oder -bearbeitungssystem nach einem der vorangehenden Ansprüche, bei welchem die zumindest eine elektrische Kupplung (58, 60) in einem die Ferrulen (38, 40) umfänglich umgebenden Bereich der Kupplungsteile (14, 16) angeordnet ist.

15. Hohlrauminspektions- und/oder -bearbeitungssystem nach einem der vorangehenden Ansprüche, bei welchem die Dreh-Kupplung (12) ein Axialende des Kabels (6) mit einer Haspel (8) verbindet, wobei einer der beiden Kupplungsteile (16) mit dem Axialende des Kabels (6) verbunden ist und der andere der beiden Kupplungsteile (14) an der Haspel (8) angeordnet ist.

16. Hohlrauminspektions- und/oder -bearbeitungssystem nach einem der vorangehenden Ansprüche, bei welchem die Dreh-Kupplung (12) ein Axialende des Kabels (6) mit einer Kamera (4) oder einer Kamerasonde (2) verbindet, wobei einer der beiden Kupplungsteile (16) mit dem Axialende des Kabels (6) verbunden ist und der andere der beiden Kupplungsteile (14) an der Kamera (4) oder Kamerasonde (2) angeordnet ist

17. Dreh-Kupplung (12) für ein Lichtwellenleiterkabel, insbesondere zur Verwendung in einem Hohlrauminspektions- und/oder -bearbeitungssystem nach einem der vorangehenden Ansprüche, welche zwei Kupplungsteile (14, 16)aufweist, die drehfest miteinander verbunden oder miteinander verbindbar sind, und bei welcher
in den beiden Kupplungsteilen (14, 16) jeweils eine mit einem Ende eines Lichtwellenleiters (26, 28) verbundene Ferrule (38, 40) angeordnet ist, von denen zumindest eine Ferrule (38) in dem zugehörigen Kupplungsteil (16) drehbar gelagert ist, sowie bei welcher die Ferrulen (38, 40) mit einer am Außenumfang der Ferrulen (38, 40) anliegenden Hülse (48) derart in Eingriff sind, dass die Ferrulen (38, 40) durch die umgebende Hülse (48) fluchtend zueinander ausgerichtet sind und dass zumindest eine der Ferrulen (40) im Inneren der Hülse (48) um Ihre Längsachse (D) drehbar ist.
